# EUROPÄISCHE PATENTSCHRIFT

(11) **EP 2 114 730 B1**
(45) Veröffentlichungstag und Bekanntmachung des Hinweises auf die Patenterteilung: **26.02.2014**
(21) Anmeldenummer: 07847955.7
(22) Anmeldetag: 07.12.2007
(51) Int. Cl.: B60R 16/03, H04L 12/42, B60W 50/02, B60T 8/88, B60T 8/32

(54) **FAHRZEUGGESTÜTZTES DATENVERARBEITUNGSSYSTEM**
VEHICLE-SUPPORTED DATA PROCESSING SYSTEM
SYSTÈME DE TRAITEMENT DE DONNÉES INSTALLÉ DANS UN VÉHICULE

(30) Priorität: 22.12.2006 DE 102006061272
(43) Veröffentlichungstag der Anmeldung: 11.11.2009
(73) Patentinhaber: Robert Bosch GmbH, 70442 Stuttgart (DE)
(72) Erfinder: BOEHL, Eberhard, 72768 Reutlingen (DE); HARTER, Werner, 75428 Illingen (DE)
(86) Internationale Anmeldenummer: PCT/EP2007/063489
(87) Internationale Veröffentlichungsnummer: WO 2008/077739

(56) Entgegenhaltungen:
- DE-A1- 19 634 567
- US-A- 5 079 759

## Beschreibung

### Stand der Technik

Die vorliegende Erfindung betrifft ein fahrzeuggestütztes Datenverarbeitungssystem mit einer Mehrzahl von über ein Bussystem miteinander kommunizierenden Verarbeitungseinheiten, die durch jeweils wenigstens eines von wenigstens zwei verschiedenen Bordnetzen mit Betriebsenergie versorgt sind. Ein solches zur Steuerung von Bremsen des Fahrzeugs eingesetztes Datenverarbeitungssystem ist aus DE 19 634 567 A1 bekannt.

Dieses herkömmliche System umfasst eine Pedaleinheit, die Führungsgrößen für Teilbremskräfte für die Räder der Vorderachse und Hinterachse festlegt, und Radpaareinheiten, die die Führungsgrößen empfangen und Ansteuergrößen für elektrische Aktoren der Bremsen abgeben. Das Bussystem ist unterteilt in ein erstes Kommunikationssystem, über das die von einem ersten Bordnetz gespeiste erste Radpaareinheit mit der Pedaleinheit kommuniziert, und ein zweites Kommunikationssystem, über das die von einem zweiten Bordnetz gespeiste zweite Radpaareinheit mit der Pedaleinheit kommuniziert. Die Aufteilung des Bussystems in zwei getrennte Kommunikationssysteme ermöglicht bei einem Ausfall einer Radpaareinheit oder des diese versorgenden Bordnetzes die Fortsetzung der Kommunikation mit der übrig gebliebenen Radpaareinheit, so dass die von dieser Radpaareinheit gesteuerten Bremsen aktionsfähig bleiben. Eine Leitungsunterbrechung an einem der Kommunikationssysteme führt aber in jedem Fall zum Ausfall der Kommunikation zwischen an dieses Kommunikationssystem angeschlossenen Einheiten, so dass die Gefahr eines partiellen Ausfalls des Bremssystems nicht vernachlässigbar ist.

Ein Ringbussystem, das im Falle der Unterbrechung einer einzelnen Verbindung zwischen zwei Einheiten eine ungestörte Fortsetzung der Kommunikation der Einheiten untereinander ermöglicht, ist in DE 10 223 007 A1 beschrieben. Wenn man die Möglichkeit in Betracht zieht, Einheiten dieses bekannten Systems durch verschiedene Bordnetze zu versorgen, so erkennt man, dass ein Ausfall eines Bordnetzes, das mehrere Einheiten versorgt, mit hoher Wahrscheinlichkeit zu einem vollständigen Ausfall der Kommunikation auf dem Ringbus führt.

Die US-Patentschrift US 5,079,759 A beschreibt gemäß Oberbegriff des Anspruchs 1 ein ringförmiges Datenübertragungssystem mit mehreren Teilnehmern, in welchem durch an geeigneten Stellen platzierte Schaltmittel, sowie durch geeignete Sende- und Auswertemittel die Detektion und Lokalisierung eines Leitungsbruches oder einer Störung ermöglicht wird, um so die Fehlerbehebung zu erleichtern. Die vollständige oder teilweise Aufrechterhaltung der Kommunikation zwischen den Teilnehmern bei Auftreten einer solchen Störung wird nicht thematisiert.

### Offenbarung der Erfindung

Es besteht daher Bedarf nach einem fahrzeuggestützten Datenverarbeitungssystem, das Unempfindlichkeit gegen den Ausfall einer einzelnen Spannungsversorgung mit Unempfindlichkeit gegen die Unterbrechung einer Verbindung zwischen den Einheiten des Systems verbindet.

Dieser Bedarf wird erfindungsgemäß befriedigt durch ein fahrzeuggestütztes Datenverarbeitungssystem mit einer Mehrzahl von über ein Bussystem miteinander kommunizierenden Verarbeitungseinheiten, die durch jeweils wenigstens eines von wenigstens zwei verschiedenen Bordnetzen mit Betriebsenergie versorgt sind, wobei unter den Verarbeitungseinheiten jeweils mehrere Sendereinheiten für Steuerinformation und mehrere Empfängereinheiten für die Steuerinformation sind, bei dem das Bussystem ein Ringbus ist, in dem jede Verarbeitungseinheit mit wenigstens zwei benachbarten Verarbeitungseinheiten durch jeweils ein Bussegment verbunden ist, und bei dem der Ringbus durch in diejenigen Bussegmente, die zwei von verschiedenen Bordnetzen versorgte Verarbeitungseinheiten verbinden, eingefügte Potenzialtrenneinrichtungen in eine Anzahl von Abschnitten gegliedert ist, die kleiner als die Zahl der Verarbeitungseinheiten ist.

Der Ausfall einer Verarbeitungseinheit oder ihres Bordnetzes kann bei einem solchen Datenverarbeitungssystem im schlimmsten Fall lediglich zur Unterbrechung der Kommunikation über diese Verarbeitungseinheit oder die von dem betroffenen Bordnetz versorgten Verarbeitungseinheiten führen; von einem anderem Bordnetz versorgte Verarbeitungseinheiten, die zu mehreren an einem gleichen Abschnitt liegen, sind von der Unterbrechung nicht betroffen.

Um die Kommunikationsfähigkeit beim Ausfall eines Bordnetzes so weit wie möglich aufrecht zu erhalten, sollten die Abschnitte so wenig zahlreich wie möglich sein beziehungsweise jeweils möglichst viele Verarbeitungseinheiten zusammenfassen. Vorzugsweise ist daher die Zahl der Abschnitte gleich der Zahl der Bordnetze.

Falls der Ausfall einer Verarbeitungseinheit oder ihres Bordnetzes dazu führt, dass über die betreffende Verarbeitungseinheit hinweg kein Datenverkehr mehr möglich ist, ist es zweckmäßig, wenn der Ringbus bidirektional und rekonfigurierbar ist.

Um die Folgen eines Bordnetzausfalls zu minimieren, ist ferner jede Empfängereinheit vorzugsweise ausgelegt, ausschließlich oder zumindest vorrangig Befehle einer Sendereinheit zu verarbeiten, die durch dasselbe Bordnetz wie die Empfängereinheit versorgt ist.

Die Potenzialtrenneinrichtungen können Optokoppler oder zwischen einem Dateneingang und -ausgang verbundene Kondensatoren umfassen. Weitere Möglichkeiten der Potenzialtrennung sind induktive Koppler oder piezoelektrische Wandlerpaare, bei denen ein Wandler eine angelegte elektrische Spannung in eine Verformung eines Kristallgitters umsetzt und diese Verformung von einem komplementären Wandler erfasst und wieder in eine Spannung gewandelt wird.

Bei Verwendung eines Kondensators in einer Potenzialtrenneinrichtung ist es zweckmäßig, dass der Kondensator mit dem Datenausgang über eine Schwellwertschaltung mit hochohmigem Eingang verbunden ist. Eine solche Schwellwertschaltung erlaubt es, mit Hilfe einer geringen über den Kondensator hinweg verschobenen Ladung eine Mehrzahl von Empfängern oder einen Empfänger mit niederohmigem Eingang zu treiben.

Die Verarbeitung der Steuerinformation in den Empfängereinheiten beruht vorzugsweise darin, dass jede der Empfängereinheiten eine von mehreren identischen Einrichtungen des Fahrzeugs anhand der empfangenen Steuerinformation steuert. Indem die identischen Einrichtungen wie etwa Bremsen an Rädern des Fahrzeugs mehrfach vorhanden sind, entfällt der durch die Steuerung beabsichtigte Effekt nicht vollständig, wenn eine dieser Einrichtungen ausfällt.

Die Empfängereinheiten der Bremsen von sich am Fahrzeug diagonal gegenüber liegenden Rädern liegen vorzugsweise an einem gleichen Abschnitt des Ringbusses und sind folglich auch durch das gleiche Bordnetz versorgt. So bleiben bei Ausfall eines Bordnetzes die Bremsen eines diagonalen Räderpaars, deren Empfängereinheiten von dem jeweils anderen Bordnetz versorgt sind, betriebsbereit.

Unter den Verarbeitungseinheiten befindet sich vorzugsweise wenigstens ein Gateway, der Datenverkehr zwischen dem Ringbus und einem zweiten mit dem Gateway verbundenen Bus unterstützt. Dieser zweite Bus kann ein beliebiger auf dem Gebiet der Kraftfahrzeugelektronik verbreiteter Bus wie etwa ein CAN-, LIN-, MOST- oder FlexRay-Bus sein, über den zum Beispiel aus den an den Ringbus angeschlossenen Verarbeitungseinheiten herrührende Störungsmeldungen an eine Anzeigevorrichtung übergeben werden können, um sie dem Fahrer anzuzeigen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines erfindungsgemäßen Datenverarbeitungssystems;
- Fig. 2: eine bevorzugte Segmentstruktur des Ringbusses von Fig. 1;
- Fig. 3: eine erste Ausgestaltung einer Potenzialtrenneinrichtung;
- Fig. 4: eine zweite Ausgestaltung einer Potenzialtrenneinrichtung;
- Fig. 5: eine dritte Ausgestaltung einer Potenzialtrenneinrichtung;
- Fig. 6: eine Potenzialtrenneinrichtung in Reihe mit einem Encoder und einem Decoder;
- Fig. 7: ein Gateway, das den Ringbus mit einem zweiten Bus verbindet; und
- Fig. 8: ein Ringbussystem mit über Gateways verbundenen Busabschnitten.

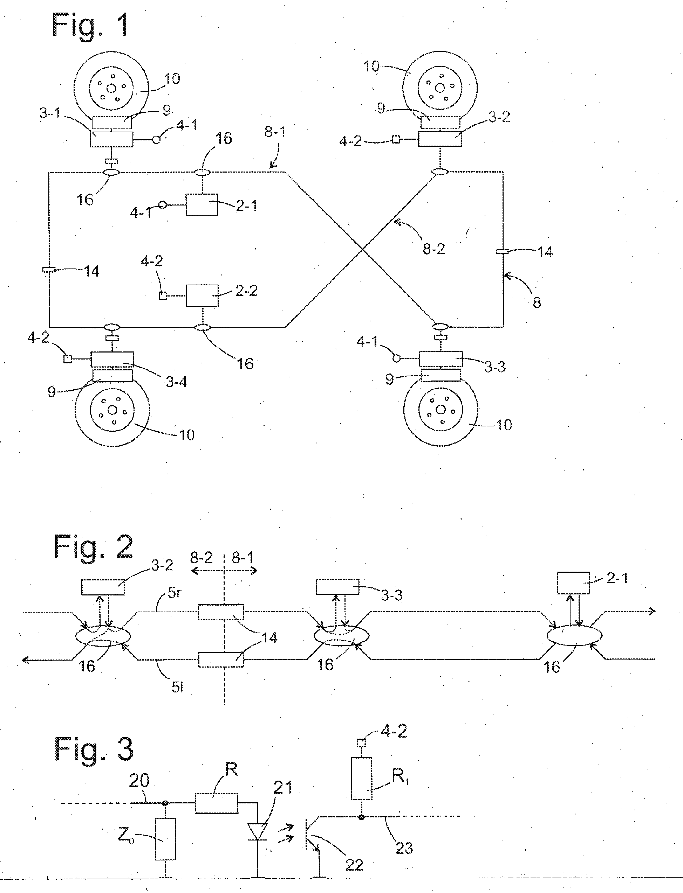

Fig. 1 ist ein Blockdiagramm eines Kraftfahrzeug-Bremssystems gemäß einer ersten Ausgestaltung der Erfindung. Das System umfasst zwei Steuereinheiten 2-1, 2-2, die anhand einer abgetasteten Stellung eines nicht dargestellten Bremspedals Steuerbefehle für Radeinheiten 3-1, 3-3, 3-4 erzeugen, die an den einzelnen Rädern 10 des Kraftfahrzeugs angeordnet sind, um anhand der empfangenen Befehle Aktoren von Bremsen 9 anzusteuern. Befehle von den Steuereinheiten 2-1, 2-2 an die Radeinheiten 3-1 bis 3-4 sowie gegebenenfalls Rückmeldungen der Radeinheiten an die Steuereinheiten werden über einen Ringbus 8 übermittelt. Die Steuereinheit 2-1 und die Radeinheiten 3-1 des rechten Vorderrads und 3-3 des linken Hinterrades sind von einem ersten Bordnetz 4-1 versorgt; die Steuereinheit 2-2 und die Radeinheiten 3-2 des rechten Hinterrades und 3-4 des linken Vorderrades sind von einem zweiten Bordnetz 4-2 versorgt. Die Steuereinheit 2-1 bzw. 2-2 ist eingerichtet, Befehle an die von demselben Bordnetz 4-1 bzw. 4-2 wie sie selbst versorgten Radeinheiten 3-1, 3-3 bzw. 3-2, 3-4 zu adressieren. Es kann vorgesehen werden, dass die einzelnen Radeinheiten nicht nur an sie adressierte Befehle ausführen, sondern bei Ausbleiben solcher Befehle auch an eine andere Radeinheit adressierte Befehle. So können bei Ausfall einer Steuereinheit die ihr zugeordneten Bremsen wirksam bleiben.

Der Ringbus 8 ist durch Potenzialtrenneinrichtungen 14, die jeweils in die Radeinheiten 3-1 und 3-4 beziehungsweise 3-2 und 3-3 verbindenden Bussegmenten angeordnet sind, in zwei Abschnitte 8-1, 8-2 unterteilt, wobei alle an einem gleichen Abschnitt 8-i, i=1, 2, des Ringbusses 8 liegenden Einheiten vom gleichen Bordnetz 4-i gespeist sind. So ist sichergestellt, dass auch wenn der Ausfall eines Bordnetzes, zum Beispiel des Bordnetzes 4-2, keine Datenübertragung über von diesem Bordnetz gespeiste Verarbeitungseinheiten 2-2, 3-2, 3-4 mehr möglich ist, die von dem anderen Bordnetz 4-1 versorgten Einheiten 2-1, 3-1, 3-3 sämtlich durch ungestörte Bussegmente verbunden sind, so dass zwischen ihnen die Kommunikation aufrecht erhalten werden kann.

Fig. 2 zeigt einen Ausschnitt des Datenverarbeitungssystems gemäß einer bevorzugten Weiterentwicklung der Erfindung. Der Ringbus 8 besteht hier aus zwei in entgegengesetzte Richtungen übertragenden unidirektionalen Ringen 5r, 5l. Jedes Segment eines solchen unidirektionalen Rings 5r, 5l verbindet zwei Datenweichen 16 von benachbarten Verarbeitungseinheiten 2-1, ..., 3-4, wobei in dem in Fig. 2 gezeigten Ausschnitt die Einheiten 3-2, 3-3, 2-2 dargestellt sind. In einem Normalbetriebszustand verbindet zum Beispiel die Datenweiche 16 der Radeinheit 3-3 das von der Radeinheit 3-2 kommende Segment der Leitung 5r mit einem Dateneingang der Radeinheit 3-3 und einen Datenausgang derselben Einheit 3-3 mit einem zur Steuereinheit 2-2 führenden Segment sowie ein von der Steuereinheit 2-2 kommendes Segment des Rings 5l mit einem weiter zur Radeinheit 3-2 führenden Segment. Datenübertragung findet im Normalbetriebszustand lediglich auf dem Ring 5r statt. Auf der Leitung 5l werden leere Datenrahmen jeweils von einer Datenweiche 16 zur nächsten übertragen.

Bei einem Ausfall des Bordnetzes 4-1 der Radeinheit 3-3 koppelt die Datenweiche 16 die Radeinheit 3-3 aus dem Ring 5r aus und verbindet dessen zwei Segmente direkt miteinander, wie in der Figur durch eine strichpunktierte Linie symbolisiert. Wenn dies an den Datenweichen aller vom Bordnetz 3-1 gespeisten Einheiten in gleicher Weise geschieht, bleibt der Ring 5r trotz des Ausfalls geschlossen, und die Einheiten 3-2, 2-2, 3-4 können ungestört über den Ring miteinander kommunizieren.

Wenn eine Störung dazu führt, dass keine Datenübertragung im Abschnitt 8-2 mehr möglich ist, gelangt auch das Rahmensignal auf dem Ring 5l nicht mehr von der Datenweiche 16 der Radeinheit 3-3 zu derjenigen der Radeinheit 3-2. Wenn dies in Höhe der Radeinheit 3-2 erkannt wird, reagiert die Datenweiche 16 dieser Radeinheit 3-2, indem sie den Datenausgang der Radeinheit 3-2 von dem zur Einheit 3-3 führenden Segment des Rings 5r trennt und mit dem zur Steuereinheit 2-1 führenden Segment des Rings 5l verbindet, wie wiederum durch eine strichpunktierte Linie dargestellt.

Wenn das Bordnetz 4-1 ausfällt, so führt dies nicht nur dazu, dass die von diesem Bordnetz 4-1 versorgte Radeinheit 3-1 keine Daten mehr über den Ring 5r an die Radeinheit 3-4 übermittelt, sondern es entfällt auf dem diese beiden Einheiten verbindenden Segment des Rings 5r auch das Rahmensignal, in das diese Daten eingefügt werden. Die normal versorgte Radeinheit 3-4 sendet zwar das Rahmensignal weiter an die Steuereinheit 2-2, erhält aber keine Daten von ihr auf dem Ring 5r vorgelagerten Einheiten, um sie an die Radeinheit 2-2 weiter zu übertragen. In analoger Weise wie oben beschrieben erkennt die Radeinheit 3-4 das Ausbleiben des Rahmensignals von der Radeinheit 3-1, woraufhin in ihrer Datenweiche 16 das von der Steuereinheit 2-2 kommende Segment des Rings 5l mit dem Dateneingang der Radeinheit 3-4 verbunden wird, während der Datenausgang mit dem zur Steuereinheit 2-2 führenden Segment des Rings 5r verbunden bleibt.

Durch die oben beschriebenen Umschaltmaßnahmen in den Datenweichen 16 der Radeinheiten 3-2, 3-4 wird der Abschnitt 8-2 zu einem unidirektionalen Ringbus umkonfiguriert, über den die vom Bordnetz 4-2 gespeisten Einheiten 2-2, 3-2, 3-4 uneingeschränkt weiter miteinander kommunizieren können. Die Funktionsfähigkeit der von den Radeinheiten 3-2, 3-4 gesteuerten Bremsen 9 ist daher durch den Ausfall des Bordnetzes 4-1 nicht beeinträchtigt.

Potenzialtrenneinrichtungen 14 sind in jedem Segment der Ringe 5r, 5l vorhanden, das von verschiedenen Bordnetzen gespeiste Verarbeitungseinheiten miteinander verbindet, das heißt in den sich jeweils zwischen den Radeinheiten 3-1 und 3-4 beziehungsweise 3-3, 3-2 erstreckenden Segmenten.

Ein erstes Beispiel einer solchen Potenzialtrenneinrichtung 14 ist ein Optokoppler, wie in Fig. 3 dargestellt. Der einfacheren Beschreibung wegen sei angenommen, dass die Potenzialtrenneinrichtung in dem sich von der Radeinheit 3-3 zur Radeinheit 3-2 erstreckenden Segment des Rings 5r angeordnet ist, wobei sich versteht, dass in anderen Segmenten angeordnete Potenzialtrenneinrichtungen denselben Aufbau haben können. Das Segment umfasst eine unsymmetrische Eingangsleitung 20, auf der die Potentialtrenneinrichtung 14 Daten von der Radeinheit 3-3 empfängt, und eine Ausgangsleitung, auf der die Daten zur Radeinheit 3-2 weiter befördert werden. Ein Vorwiderstand R einer Leuchtdiode 21 sowie ein dazu parallel zwischen die Eingangsleitung 20 und Masse geschalteter Widerstand Z₀ bestimmen den Abschlusswiderstand der Eingangsleitung 20. Licht von der Leuchtdiode 21 moduliert den Widerstand eines Fototransistors 22, dessen Kollektor über einen Widerstand mit dem Bordnetz 4-2 verbunden ist und dessen Emitter auf Masse gelegt ist. Die Ausgangsleitung 23 geht von dem Kollektor des Fototransistors 22 aus.

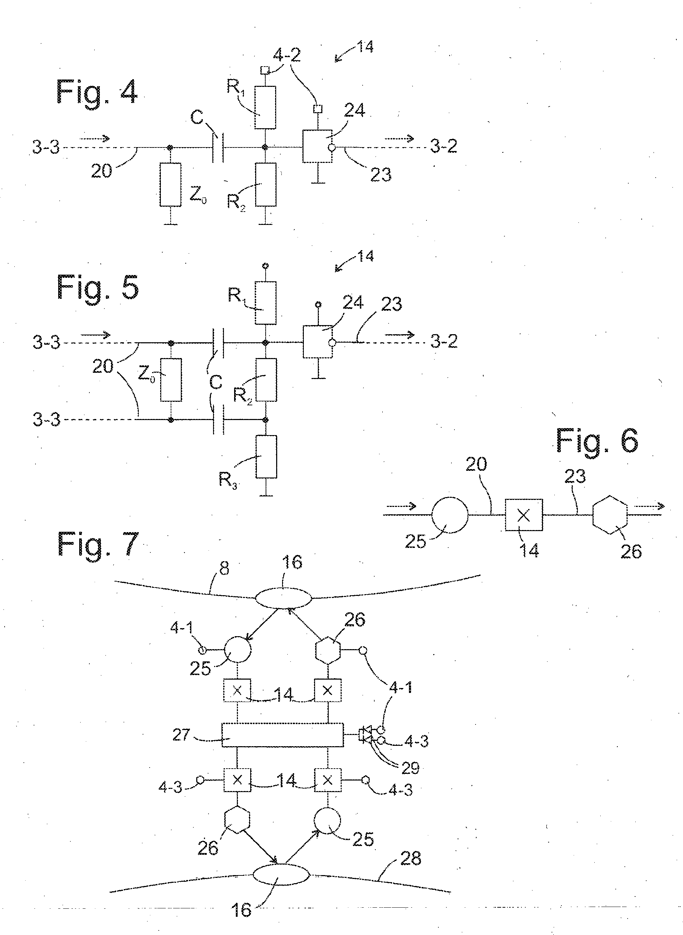

Fig. 4 zeigt eine kapazitive Potenzialtrenneinrichtung, die wie die Potenzialtrenneinrichtung der Fig. 3 zwischen den Radeinheiten 3-3, 3-2 angeordnet angenommen ist. Ein Eingangswiderstand R der Potenzialtrenneinrichtung 14 ist zwischen die von der Radeinheit 3-3 kommende Eingangsleitung 20 und Masse geschaltet. Ein Kondensator C verbindet die Eingangsleitung 20 mit einem Mittenpunkt eines zwischen das Bordnetz 4-2 und Masse geschalteten Spannungsteiler aus Widerständen R₁, R₂. Der Mittenpunkt ist ferner mit einem Eingang einer Schwellwertschaltung, hier in Form eines digitalen Inverters 24, verbunden, der wie die Radeinheit 3-2 vom Bordnetz 4-2 versorgt ist.

Die elektrischen Elemente der Potenzialtrennvorrichtung sind so dimensioniert, dass sie einen Abschlusswiderstand gleich dem Wellenwiderstand der Leitung 20 bilden, um Reflexionen zu vermeiden. Die Koppelkapazität des Kondensators C beträgt ca. das zehnfache der Eingangskapazität des Inverters 24. Diese kann zum Beispiel durch Realisierung des Inverters 24 in CMOS-Technik, sehr gering gehalten werden. Der Pegelverlust eines über den Kondensator C hinweg übertragenen Signals ist dann entsprechend der kapazitiven Spannungsteilungzwischen Kondensator und Invertereingang auf weniger als 10% begrenzt. Die genaue Dimensionierung der Kapazität ist vom Spannungshub am Eingang des Inverters 24 und von dessen Arbeitspunkt ab. Der Arbeitspunkt ist durch das Verhältnis der Widerstände R1 und R2 einstellbar und etwas oberhalb der Schaltschwelle des Inverters 24 einzustellen, damit geringfügige Störungen und Rauschen keinen Einfluss auf das Ausgangssignal des Inverters haben. Dabei kann zu berücksichtigen sein, ob die Potenzialtrenneinrichtung im Ruhebetrieb (ohne Signal von der Leitung 20) einen Arbeitspunkt einnehmen soll, bei dem der Inverter 24 möglichst wenig Strom verbraucht. Die absoluten Widerstandswerte der Widerstände R1 und R2 sind so ausgelegt, dass die resultierende Zeitkonstante R*C in der Potenzialtrenneinrichtung 14 deutlich größer ist als die maximale Zeitdauer, in der der Pegel des über die Leitung 20 zugeführten Signals konstant bleibt. Diese Zeitdauer ist abhängig von der auf dem Segment übertragenen Datenrate und der Art der Codierung der Daten. Dabei ist R ein Widerstandswert, der aus der Parallelschaltung von R1 und R2 sowie dem Eingangswiderstand des Inverters 24 (sofern dieser nicht als unendlich angenommen werden kann) resultiert.

Fig. 5 zeigt eine Potenzialtrenneinrichtung mit symmetrischer Eingangsleitung 20, zwischen deren zwei Adern der Eingangswiderstand Z₀ geschaltet ist. Beide Adern sind jeweils über einen Kondensator C mit Knoten eines aus in Reihe geschalteten Widerständen R₁, R₂, R₃ gebildeten Spannungsteilers verbunden. An einem dieser Knoten ist ein Inverter 24 angeschlossen, dessen Ausgang die Ausgangsleitung 23 treibt. Die Funktionsweise der Potenzialtrenneinrichtung von Fig. 5 ist im wesentlichen dieselbe wie bei der Potenzialtrenneinrichtung nach Fig. 4. Es ist lediglich bei der Dimensionierung der Komponenten zu berücksichtigen, dass, da die Kondensatoren C effektiv in Reihe geschaltet sind, ihre effektive gemeinsame Kapazität die Hälfte der Kapazität jedes einzelnen von ihnen beträgt.

Bei den Potenzialtrenneinrichtungen der Fig. 4 und 5 wird der logische Pegel der Signale beim Durchgang invertiert, das heißt ein Impuls, der mit hohem Pegel auf der Leitung 20 eintrifft, wird als Impuls mit niedrigem Pegel auf der Leitung 23 ausgegeben, und umgekehrt. Dieser Tatsache kann jeweils an den die Signale empfangenden Verarbeitungseinheiten Rechnung getragen werden, oder es kann ein zweiter Inverter in Reihe mit dem Inverter 24 eingefügt werden, um eine abermalige Pegelinversion zu bewirken.

Um die Kondensatoren C der Potenzialtrenneinrichtungen von Fig. 4 und 5 unverfälscht durchlaufen zu können, muss die Codierung, mit der die Datensignale auf den Leitungen 20, 23 übertragen werden, im Mittel gleichstromfrei sein, und die maximale Zeitspanne, über die der Pegel dieser Signale konstant bleiben kann, muss begrenzt sein. Dies ist durch eine geeignete Codierung der Signale erreichbar. Wenn eine entsprechende Codierung der Signale für die Kommunikation zwischen den Verarbeitungseinheiten nicht gewünscht ist, kann, wie in Fig. 6 dargestellt, jeder Potenzialtrenneinrichtung 14 ein erster Codewandler 25 vorund ein zweiter Codewandler 26 nachgeschaltet sein, deren Aufgabe jeweils darin besteht, Datensignale, die in einem beliebigen Darstellungsformat beziehungsweise einer beliebigen Codierung von einer vorgelagerten Verarbeitungseinheit am ersten Codewandler 25 eintreffen, in eine für die Übertragung über die Potenzialtrenneinrichtung 14 hinweg geeignete, im Mittel gleichstromfreie und pulsbreitenbegrenzte Codierung umzusetzen und diese nach Passieren der Potenzialtrenneinrichtung 14 in das ursprüngliche - oder gegebenenfalls auch ein drittes - Darstellungsformat (zurück) zu wandeln, das von einer nachgeordneten Verarbeitungseinheit verarbeitbar ist.

Unter den Verarbeitungseinheiten an Ringbus 8 kann sich auch eine Gateway-Einheit 27 befinden, deren Aufgabe im wesentlichen darin liegt, den Datenaustausch zwischen Verarbeitungseinheiten an dem Ringbus 8 und Verarbeitungseinheiten an einem anderen Bussystem 28 zu unterstützen. Für die Beschreibung der Gateway-Einheit 27 und ihrer Arbeitsweise mit Bezug auf Fig. 7 wird angenommen, dass Verarbeitungseinheiten am Ringbus 8 von einem Bordnetz 4-1 und Verarbeitungseinheiten am Bussystem 28 von einem Bordnetz 4-3 versorgt sind. Am Ringbus 8 können, wie in Fig. 1 gezeigt, auch von einem weiteren Bordnetz 4-2 gespeiste Verarbeitungseinheiten vorhanden sein, doch ist dies für die Funktion der Gateway-Einheit 27 nicht erforderlich. Die Gateway-Einheit 27 ist parallel durch die beiden Bordnetze 4-1, 4-3 versorgt, wobei zwischen den beiden Bordnetzen und einem Versorgungsspannungseingang der Gateway-Einheit 27 jeweils eine Diode 29 oder ein anderes geeignetes Entkopplungselement vorgesehen ist, das verhindert, dass durch einen Kurzschluss in einem der Bordnetze auch das jeweils andere überlastet wird.

Die Gateway-Einheit 27 hat zwei Dateneingänge, die jeweils über einen ersten Codewandler 25 und eine Potenzialtrenneinrichtung 14 mit dem Ringbus 8 beziehungsweise dem Bussystem 28 verbunden sind, sowie zwei Datenausgänge, die ihrerseits über eine Potenzialtrenneinrichtung 14 und einen zweiten Codewandler 26 mit dem Ringbus 8 beziehungsweise dem Bussystem 28 verbunden sind. Die Codewandler 25, 26 auf Seiten des Ringbusses 8 sind vom Bordnetz 4-1 gespeist; diejenigen auf Seiten des Bussystems 28 vom Bordnetz 4-3. Bei Ausfall eines dieser Bordnetze, zum Beispiel des Bordnetzes 4-1, fallen die davon gespeisten Codewandler 25, 26 sowie die (in Fig. 7 nicht gezeigten) Verarbeitungseinheiten an Ringbus 8 aus, doch bleibt die Gateway-Einheit 27 als solche betriebsbereit und in der Lage, Verarbeitungseinheiten auf Seiten des Bussystems 28 den Ausfall der Einheiten am Ringbus 8 zu signalisieren. Entsprechendes gilt in umgekehrter Richtung bei einem Ausfall des Bordnetzes 4-3.

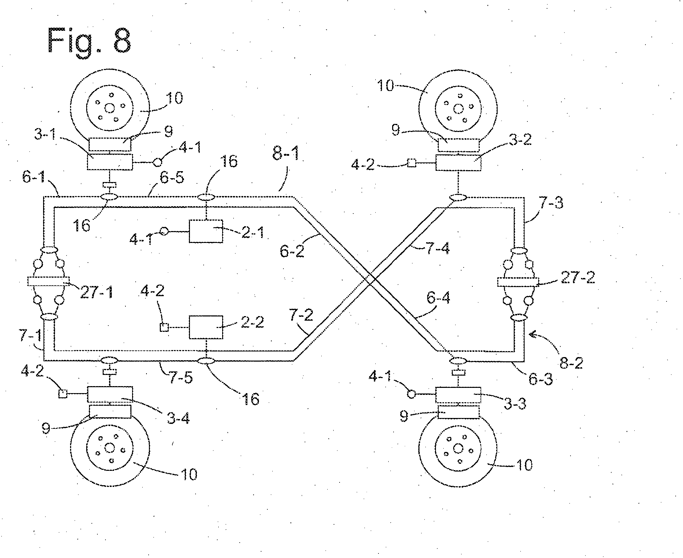

Ein Gateway der in Fig. 7 gezeigten Art kann seinerseits als eine Potenzialtrenneinrichtung in einem bidirektionalen rekonfigurierbaren Ringbus mit einer ähnlichen Topologie wie in Fig. 1 gezeigt eingesetzt werden. Eine solche Anwendung ist in Fig. 8 dargestellt. Elemente, die mit Bezug auf Fig. 1 beschriebenen entsprechen, sind mit denselben Bezugszeichen bezeichnet und werden nicht erneut behandelt. Das System umfasst zwei Busabschnitte 8-1, 8-2, die an zwei Stellen über Gateway-Einheiten 27-1, 27-2 verknüpft sind. Der erste Abschnitt 8-1 kann aufgefasst werden als ein unidirektionaler Ringbus mit Segmenten 6-1 zwischen der Radeinheit 3-1 und der Gateway-Einheit 27-1, 6-2 zwischen den zwei Gateway-Einheiten 27-1 und 27-2, 6-3 zwischen der Gateway-Einheit 27-2 und der Radeinheit 3-3, 6-4 zwischen der Radeinheit 3-3 und der Steuereinheit 2-1 und 6-5 zwischen der Steuereinheit 2-1 und der Radeinheit 3-1. Der Abschnitt 8-2 hat einen entsprechenden Aufbau mit Segmenten 7-1 bis 7-5. Solange das System störungsfrei arbeitet, überträgt die Gateway-Einheit 27-1 sämtliche auf dem Segment 6-1 des Abschnitts 8-1 eintreffenden Daten auf das Segment 7-1 des Abschnitts 8-2, und die Gateway-Einheit 27-2 überträgt sämtliche auf dem Segment 7-3 eintreffenden Daten auf das Segment 6-3. Der Ausfall eines Bordnetzes, zum Beispiel des Bordnetzes 4-1, wird von den Gateway-Einheiten 27-1, 27-2 registriert und führt dazu, dass die Einheit 27-2 auf dem Segment 7-3 eintreffende Daten auf das Segment 7-4 umlenkt. Symmetrisch hierzu reagiert die Gateway-Einheit 27-1 durch Umlenken der nun auf dem Segment 7-2 eintreffenden Daten auf das Segment 7-1. Das heißt, immer dann, wenn das Bordnetz eines der Abschnitte 8-1, 8-2 ausfällt, werden die Segmente des jeweils anderen Abschnitts zu einem Ringbus zusammengefasst, auf dem die von dem Ausfall nicht betroffenen Einheiten weiter kommunizieren können.

## Patentansprüche

1. Fahrzeuggestütztes Datenverarbeitungssystem mit einer Mehrzahl von über ein Bussystem (8) miteinander kommunizierenden Verarbeitungseinheiten (2-1, 2-2, 3-1, 3-2, 3-3, 3-4),
die durch jeweils wenigstens eines von wenigstens zwei verschiedenen Bordnetzen (4-1, 4-2) mit Betriebsenergie versorgt sind,
wobei unter den Verarbeitungseinheiten (2-1, 2-2, 3-1, 3-2, 3-3, 3-4) jeweils mehrere Sendereinheiten (2-1, 2-2) für Steuerinformation und mehrere Empfängereinheiten (3-1, 3-2, 3-3, 3-4) für die Steuerinformation sind,
wobei
das Bussystem (8) ein Ringbus ist, in dem jede Verarbeitungseinheit (2-1, 2-2, 3-1, 3-2, 3-3, 3-4) mit wenigstens zwei benachbarten Verarbeitungseinheiten durch jeweils ein Bussegment verbunden ist,
und dass der Ringbus (8) durch in diejenigen Bussegmente, die zwei von verschiedenen Bordnetzen versorgte Verarbeitungseinheiten (3-3, 3-2; 3-4, 3-1) verbinden, eingefügte Potentialtrenneinrichtungen (14; 27-1, 27-2) derart in eine Anzahl von Abschnitten (8-1, 8-2) gegliedert ist, **dadurch gekennzeichnet, dass** bei Ausfall eines der wenigstens zwei verschiedenen Bordnetze wenigstens einer der Abschnitte Kommunikationsfähigkeit bleibt, wobei die Anzahl von Abschnitten kleiner
als die Zahl der Verarbeitungseinheiten (2-1, 2-2, 3-1, 3-2, 3-3, 3-4) ist.

2. Datenverarbeitungssystem nach Anspruch 1, **dadurch gekennzeichnet, dass** die Zahl der Abschnitte (8-1, 8-2) gleich der Zahl der Bordnetze (4-1, 4-2) ist.

3. Datenverarbeitungssystem nach Anspruch 1 oder 2, **dadurch gekennzeichnet, dass** der Ringbus (8) bidirektional und rekonfigurierbar ist.

4. Datenverarbeitungssystem nach einem der vorhergehenden Ansprüche, **dadurch gekennzeichnet, dass** jede Empfängereinheit (3-1, 3-2, 3-3, 3-4) ausgelegt ist, ausschließlich oder zumindest vorrangig Befehle einer Sendereinheit (2-1, 2-2) zu verarbeiten, die durch dasselbe Bordnetz (4-1, 4-2) wie die Empfängereinheit (3-1, 3-2, 3-3, 3-4) versorgt ist.

5. Datenverarbeitungssystem nach einem der vorhergehenden Ansprüche, **dadurch gekennzeichnet, dass** die Potentialtrenneinrichtungen (14) Optokoppler umfassen.

6. Datenverarbeitungssystem nach einem der vorhergehenden Ansprüche, **dadurch gekennzeichnet, dass** die Potentialtrenneinrichtungen (14) zwischen einem Dateneingang und -ausgang (20, 23) verbundene Kondensatoren (C) umfassen.

7. Datenverarbeitungssystem nach Anspruch 6, **dadurch gekennzeichnet, dass** der Kondensator (C) mit dem Datenausgang (23) über eine Schwellwertschaltung (24) mit hochohmigen Eingang verbunden ist.

8. Datenverarbeitungssystem nach einem der vorhergehenden Ansprüche, **dadurch gekennzeichnet, dass** die Verarbeitung der Steuerinformation in den Empfängereinheiten (3-1, 3-2, 3-3, 3-4) darin beruht, dass jede der Empfängereinheiten eine von mehreren identischen Einrichtungen (9) des Fahrzeugs anhand der empfangenen Steuerinformation steuert.

9. Datenverarbeitungssystem nach Anspruch 8, **dadurch gekennzeichnet, dass** die identischen Einrichtungen (9) Bremsen sind.

10. Datenverarbeitungssystem nach Anspruch 9, **dadurch gekennzeichnet, dass** die Empfängereinheiten (3-1, 3-2, 3-3, 3-4) der Bremsen (9) von sich am Fahrzeug diagonal gegenüberliegenden Rädern (10) an einem gleichen Abschnitt (8-1, 8-2) des Ringbusses (8) liegen.

11. Datenverarbeitungssystem nach einem der vorhergehenden Ansprüche, **dadurch gekennzeichnet, dass** unter den Verarbeitungseinheiten wenigstens ein Gateway (27-1, 27-2) ist, der Datenverkehr zwischen dem Ringbus (8; 8-1; 8-2) und einem zweiten mit dem Gateway (27-1, 27-2) verbundenen Bus (28; 8-2; 8-1) unterstützt.

## Claims

1. Vehicle-based data processing system having a plurality of processing units (2-1, 2-2, 3-1, 3-2, 3-3, 3-4) that communicate with one another via a bus system (8)
and that are each supplied with operating power by at least one of at least two different onboard power supply systems (4-1, 4-2),
wherein the processing units (2-1, 2-2, 3-1, 3-2, 3-3, 3-4) include a plurality of transmitter units (2-1, 2-2) for control information and a plurality of receiver units (3-1, 3-2, 3-3, 3-4) for the control information, respectively,
wherein
the bus system (8) is a ring bus in which each processing unit (2-1, 2-2, 3-1, 3-2, 3-3, 3-4) is connected to at least two adjacent processing units by a respective bus segment,
and wherein the ring bus (8) is broken down into a number of sections (8-1, 8-2) by potential isolation devices (14; 27-1, 27-2) that are inserted in those bus segments that connect two processing units (3-3; 3-2; 3-4, 3-1) supplied with power by different onboard power supply systems, **characterized in that** in the event of failure of one of the at least two different onboard power supply systems at least one of the sections retains communication capability, the number of sections being smaller than the number of processing units (2-1, 2-2, 3-1, 3-2, 3-3, 3-4).

2. Data processing system according to Claim 1, **characterized in that** the number of sections (8-1, 8-2) is the same as the number of onboard power supply systems (4-1, 4-2).

3. Data processing system according to Claim 1 or 2, **characterized in that** the ring bus (8) is bidirectional and reconfigurable.

4. Data processing system according to one of the preceding claims, **characterized in that** each receiver unit (3-1, 3-2, 3-3, 3-4) is designed to process exclusively or at least preferentially commands from a transmitter unit (2-1, 2-2) that is supplied with power by the same onboard power supply system (4-1, 4-2) as the receiver unit (3-1, 3-2, 3-3, 3-4).

5. Data processing system according to one of the preceding claims, **characterized in that** the potential isolation devices (14) comprise optocouplers.

6. Data processing system according to one of the preceding claims, **characterized in that** the potential isolation devices (14) comprise capacitors (C) connected between a data input and a data output (20, 23).

7. Data processing system according to Claim 6, **characterized in that** the capacitor (C) is connected to the data output (23) via a threshold value circuit (24) having a high-impedance input.

8. Data processing system according to one of the preceding claims, **characterized in that** the processing of the control information in the receiver units (3-1, 3-2, 3-3, 3-4) involves each of the receiver units controlling one of a plurality of identical devices (9) of the vehicle using the received piece of control information.

9. Data processing system according to Claim 8, **characterized in that** the identical devices (9) are brakes.

10. Data processing system according to Claim 9, **characterized in that** the receiver units (3-1, 3-2, 3-3, 3-4) of the brakes (9) of wheels (10) situated diagonally opposite on the vehicle are situated on the same section (8-1, 8-2) of the ring bus (8).

11. Data processing system according to one of the preceding claims, **characterized in that** the processing units include at least one gateway (27-1, 27-2) that supports data traffic between the ring bus (8; 8-1; 8-2) and a second bus (28; 8-2; 8-1) connected to the gateway (27-1, 27-2).

## Revendications

1. Système de traitement de données soutenu par véhicule, présentant plusieurs unités de traitement (2-1, 2-2, 3-1, 3-2, 3-3, 3-4) qui communiquent les unes avec les autres par l'intermédiaire d'un système de bus (8) et qui sont alimentées chacune en énergie de fonctionnement par au moins un parmi deux réseaux de bord différents (4-1, 4-2),
les unités de traitement (2-1, 2-2, 3-1, 3-2, 3-3, 3-4) étant plusieurs unités d'émission (2-1, 2-2) d'informations de commande et plusieurs unités de réception (3-1, 3-2, 3-3, 3-4) de l'information de commande,
le système de bus (8) étant un bus annulaire dans lequel chaque unité de traitement (2-1, 2-2, 3-1, 3-2, 3-3, 3-4) est raccordée par un segment de bus respectif à au moins deux unités de traitement voisines,
le bus annulaire (8) étant divisé par des dispositifs (14; 27-1, 27-2) de séparation de potentiel insérés dans le segment de bus qui relie deux unités de traitement (3-3, 3-2, 3-4, 3-1) alimentées par des réseaux de bord différents en un nombre de tronçons (8-1, 8-2),
**caractérisé en ce que**
en cas de défaillance de l'un des deux ou plusieurs réseaux de bord différents, la capacité de communication d'au moins l'un des tronçons est maintenue, le nombre des tronçons fonctionnels étant inférieur au nombre des unités de traitement (2-1, 2-2, 3-1, 3-2, 3-3, 3-4).

2. Système de traitement de données selon la revendication 1, **caractérisé en ce que** le nombre des tronçons (8-1, 8-2) est égal au nombre des réseaux de bord (4-1, 4-2).

3. Système de traitement de données selon les revendications 1 ou 2, **caractérisé en ce que** le bus annulaire (8) est bidirectionnel et reconfigurable.

4. Système de traitement de données selon l'une des revendications précédentes, **caractérisé en ce que** chaque unité de réception (3-1, 3-2, 3-3, 3-4) est conçue pour traiter exclusivement ou au moins en priorité les ordres d'une unité d'émission (2-1, 2-2) qui est alimentée par le même réseau de bord (4-1, 4-2) que l'unité de réception (3-1, 3-2, 3-3, 3-4).

5. Système de traitement de données selon l'une des revendications précédentes, **caractérisé en ce que** les dispositifs (14) de séparation de potentiel comprennent des optocoupleurs.

6. Système de traitement de données selon l'une des revendications précédentes, **caractérisé en ce que** les dispositifs (14) de séparation de potentiel comprennent des condensateurs (C) raccordés entre une entrée de données et une sortie de données (20, 23).

7. Système de traitement de données selon la revendication 6, **caractérisé en ce que** le condensateur (C) est raccordé à la sorties de données (23) par un circuit (24) à valeur de seuil dont l'entrée présente une haute impédance ohmique.

8. Système de traitement de données selon l'une des revendications précédentes, **caractérisé en ce que** le traitement de l'information de commande dans les unités de réception (3-1, 3-2, 3-3, 3-4) repose sur le fait que chacune des unités de réception commande un parmi plusieurs dispositifs identiques (9) du véhicule à l'aide de l'information de commande qu'il reçoit.

9. Système- de traitement de données selon la revendication 8, **caractérisé en ce que** les dispositifs identiques (9) sont les freins.

10. Système de traitement de données selon la revendication 9, **caractérisé en ce que** les unités de réception (3-1, 3-2, 3-3, 3-4) des freins (9) de roues diagonalement opposées du véhicule sont situées sur un même tronçon (8-1, 8-2) du bus annulaire (8).

11. Système de traitement de données selon l'une des revendications précédentes, **caractérisé en ce qu'**au moins l'une des unités de traitement est un portique ("gateway") (27-1, 27-2) qui soutient l'échange de données entre le bus annulaire (8; 8-1, 8-2) et un deuxième bus (28; 8-1, 8-2) raccordé au portique ("gateway") (27-1, 27-2).
